## Europäisches Patentamt
## European Patent Office
## Office européen des brevets

(11) Publication number: **0 096 032**
**B1**

# EUROPEAN PATENT SPECIFICATION

(45) Date of publication of patent specification: **25.03.87**

(51) Int. Cl.⁴: **G 02 B 27/02**

(21) Application number: **82900483.7**

(22) Date of filing: **21.12.81**

(86) International application number:
**PCT/US81/01730**

(87) International publication number:
**WO 83/02336 07.07.83 Gazette 83/16**

(54) **SLIDE PREVIEWER AND TRAY LOADER.**

(43) Date of publication of application:
**21.12.83 Bulletin 83/51**

(45) Publication of the grant of the patent:
**25.03.87 Bulletin 87/13**

(84) Designated Contracting States:
**DE FR GB SE**

(56) References cited:
**FR-A-2 229 325**
**GB-A- 14 750**
**US-A-2 401 506**
**US-A-3 276 314**
**US-A-3 527 530**
**US-A-3 556 650**
**US-A-4 249 329**

(73) Proprietor: **LAMB, Owen L.**
**146 Bean Creek Road Number F4, P.O. Box 66737**
**Scotts Valley, CA 95066 (US)**

(72) Inventor: **LAMB, Owen L.**
**146 Bean Creek Road Number F4, P.O. Box 66737**
**Scotts Valley, CA 95066 (US)**

(74) Representative: **Zenz, Joachim Klaus, Dipl.-Ing. et al**
**ZENZ & HELBER Patentanwälte Am Ruhrstein 1**
**D-4300 Essen 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a handling mechanism for photographic slides which serves for loading a slide tray of the type which is used in slide projectors. More particularly the invention relates to a slide-handling mechanism comprising a tray loader including means for holding a slide above a slide tray, means for registering said tray loader above a slide compartment of said slide tray, and a means that allows a slide when vertically held in said holding means to drop into said compartment.

Several types of modern photographic slide projectors utilize slide trays. The slide trays are generally made of plastic with spaced compartments for holding individual slides. During projection the slides in the compartments are sequentially removed from the compartments by the slide projector mechanism and transported inside the projector for projection. After projection, each slide is transferred back to the compartment from which it came and the next sequential slide is selected.

Slide trays may be either linear or circular in shape. For example, a gravity-fed projector utilizing a circular rotating slide tray is shown in US—A—3,276,314 (Robinson). Slides are placed into the tray from above. Slides are dropped into the projector through a slot from below by force of gravity and by means of an arm which lowers the slide through the slot into the projector. After projection, the arm moves the slide up through the slot and the entire circular tray is rotated so that the next slide is positioned over the slot.

The FR—A—2,229,325 discloses a slide-handling mechanism for automatically loading the compartments of a linear slide tray in response to the relative position between the tray and a tray loader. This mechanism comprises a channel-shaped magazine having an inclined bottom surface for supporting slides stacked vertically on edge. A horizontally movable drawer plate is mounted beneath the magazine and comprises a stepped flange portion which serves to close and clear a feeding slot provided between the open lower end of the magazine and a vertically extending stop plate. The lowermost slide of the tray loader is retained on the lowest step of the flange portion and in abutting relationship to the adjacent vertical stop plate. The drawer plate is horizontally moved in reponse to a spring biased registration mechanism which senses the position of the slide compartment to be loaded and retracts the drawer plate to clear the slot and to drop the lowermost slide when the compartment to be loaded is vertically aligned with the slot and slide respectively. The drawer plate is removed by said registration mechanism to close the slot and to retain the next slide in the stack when the linear tray is advanced for loading the next compartment. This slide-handling mechanism does not permit sorting, editing, and viewing slides, but automatically loads all compartments in a fixed sequence corresponding to the stacking order of the slides in the magazine.

When sorting, editing, and viewing slides, photographers generally use a large, back-lighted diffusing screen made of opaque plastic or ground glass. The slides are placed on the screen and viewed by means of a hand-held magnifying glass. Slides can then be sorted on the screen and arranged in a desired sequence. The slides are then manually picked up and placed into the slide compartments of the slide tray in the appropriate sequence. This method is cumbersome and time-consuming.

It is an object of the present invention to provide a slide-handling mechanism which holds slides in the correct orientation for previewing and allows slides to drop into compartments of a projector tray in the correct orientation for projection.

In a slide-handling mechanism of the kind specified hereinabove this object is accomplished in accordance with the invention by means for providing a limit stop for said holding means by which said holding means is maintained in a first position in which a slide in the correct position for previewing is held inclined to the vertical position in said holding means; means for moving said holding means from said first position to a position in which the slide is vertically held, and means for retaining said slide in said holding means during the movement from said first position to said vertical position.

In a preferred embodiment of the invention, the mechanism is provided with a chute oriented on an incline to horizontal which is adapted to receive a slide at one end thereof. The other end of the chute is positioned in alignment with the holding means when the holding means is in the first position for viewing. Thus, a slide dropped onto the chute slides by force of gravity into said holding means.

The invention has the advantage that it contains very few moving parts, relying on the force of gravity to load the holding means and to drop the slides into the tray.

A further advantage of the present invention is that the apparatus can be used to preview slides prior to automatically loading a slide tray, because the slides are held in the correct orientation for viewing.

The foregoing and other objects, features and advantages of the invention will be apparent from the following detailed description of preferred embodiments of the invention as illustrated in the accompanying drawings wherein:

FIGURE 1 is a perspective view of one embodiment of the invention;

FIGURE 2 is a vertical section taken through the apparatus of FIGURE 1 as indicated by line 2—2;

FIGURE 3 is a top view of the tray loader of FIGURE 1;

FIGURE 4 is a front view of the tray loader of FIGURE 1;

FIGURE 5 is a left-side view of the slide tray

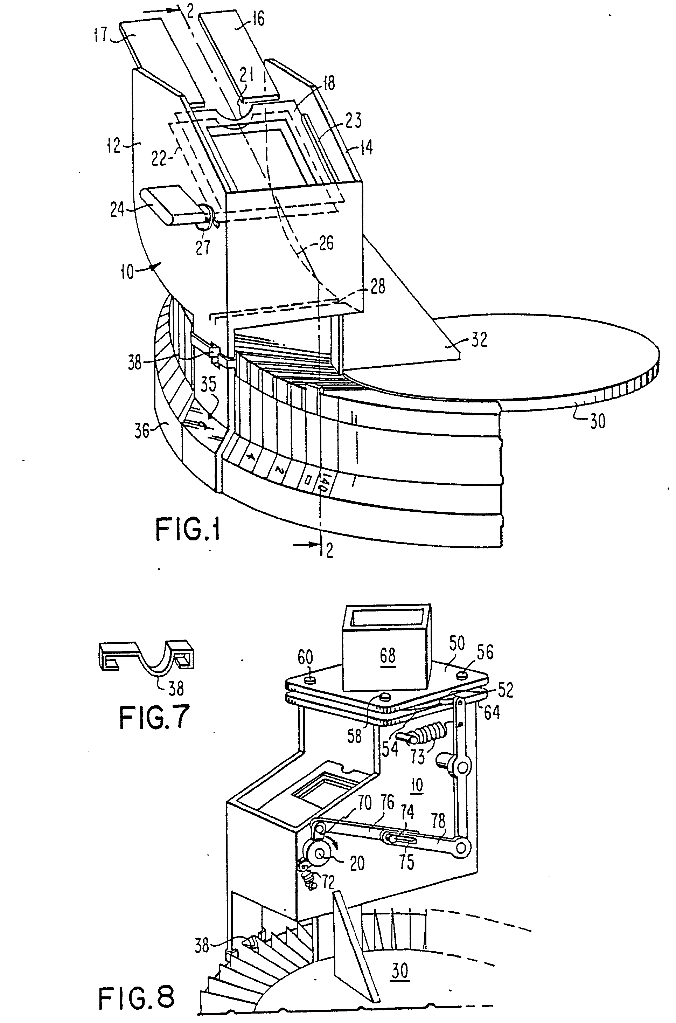

loader of FIGURE 1;

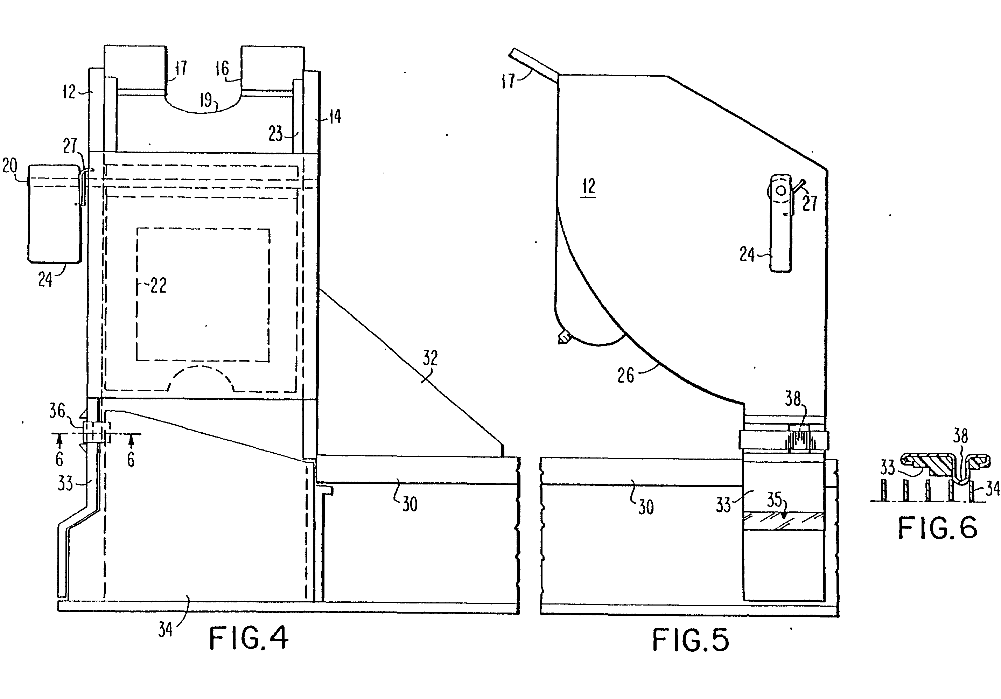

FIGURE 6 is a sectional view of the slide tray loader of FIGURE 1 taken through the slide viewer as indicated by Line 66 shown in FIGURES 4 and 5;

FIGURE 7 is a perspective view of the indexing spring shown in FIGURE 1; and,

FIGURE 8 is a perspective view of a second embodiment of the invention.

Description

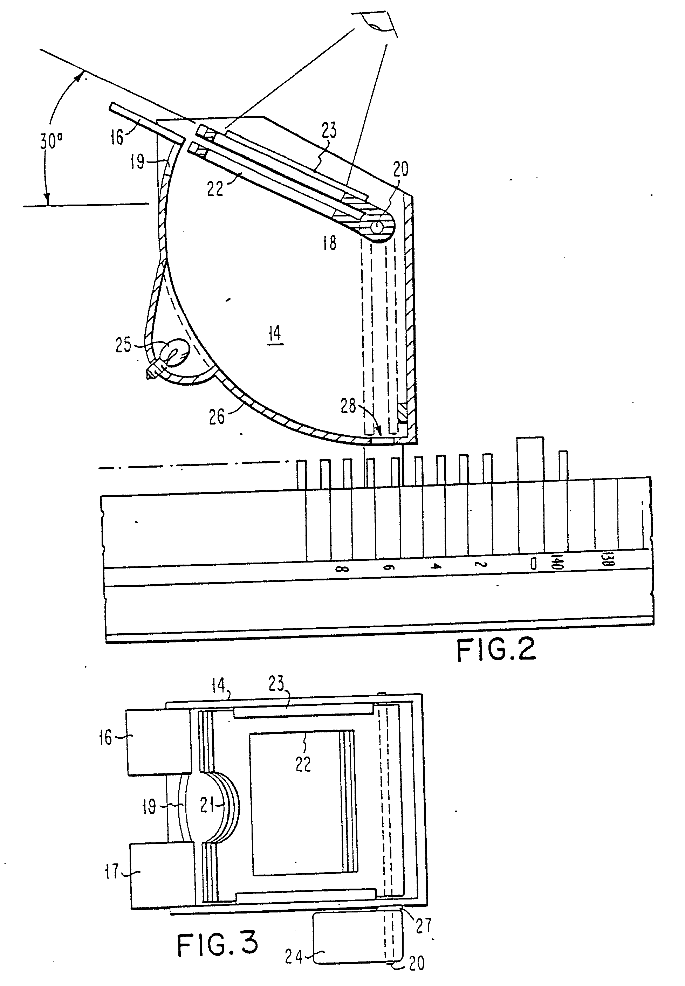

The slide previewer/tray loader is shown in FIGURE 1 and in cross-section along the view lines 22 in FIGURE 2.

The previewer/tray loader has a housing (10) made of a structural material, such as a relatively stiff sheet plastic glued together to form a frame. Within the two side-walls (12 and 14) of the frame, there is an inclined chute (16) set at an angle, for example, 30 degrees, with the horizontal.

At the lower end of the chute there is provided a slide holder (18), which is U-shaped and is rotatably mounted by means of a pin (20), which passes through holes in the wall portions (12 and 14).

The slide holder (18) may be made out of transparent plastic, or it may have a window (22) cut therein to form a viewing station through which light from a light source (25) can pass to illuminate a transparency placed in the holder.

A coil spring (27) is provided to urge the lever (24) in a clockwise direction to thus maintain the slide holder (18) against the limit stop (23) so that it is normally held in the preview position.

A curved slide-restraining portion (26) is provided with a slot (28) at the lower end thereof.

The upper part of the frame (10) is secured to a circular support (30) by means of a brace portion (32) attached to the inner wall (14). The outer wall (12) is extended to form a foot portion (33) which is shaped to the contour of the outer periphery of the slide tray (36). This foot portion may be constructed of a transparent plastic material with an index mark (35) provided thereon as shown in FIGURE 5, so that the numbers on the slide tray opposite the index mark can be read. An opening is cut in the foot portion (33) so that a detent spring can pass therethrough. This spring is provided with a U-shaped portion (38) which engages two walls of an individual slide compartment of the tray (36) such that the slot (28) is held in position directly above the slide compartment. When so positioned, a slide in the holder (18) will drop through the slot (28) into the individual slide compartment when the holder is moved to the vertical position shown by the dotted lines in FIGURE 2.

In order to view a number of slides, edit them, and load them into separate bins in a slide tray, the slide is first dropped onto the chute (16, 17), either manually or automatically from a slide hopper (68). The slide travels down the chute by force of gravity into the holder (18). The slide may be removed from the holder manually and reoriented or removed for editing by gripping the portion of the slide that protrudes from the cutout portion (21) in the holder. After viewing, the slide may be dropped into a slide compartment located opposite the index mark (35) by depressing the lever (24) which causes the holder (18) to move to the vertical position. The slide drops through the opening (28) by force of gravity and into the empty slide tray compartment. The sequential order of slides may be varied by moving the index point (35) to the empty compartment in which it is desired to place the slide.

The lever (24), when released, allows the force of the coil spring (27) to return the lever to its initial position.

Referring now to FIGURE 8, the slide previewer and tray loader shown in FIGURE 1 may be equipped with a slide hopper (68) which allows slides to be dropped automatically, one-by-one, onto the chute (16). This mechanism is more fully described in U.S. patent 4,249,329, which issued on February 10, 1981, entitled "Apparatus for Viewing and Sorting Photographic Slide Transparencies," to Owen L. Lamb. Briefly, the operation is as follows. Slides are placed in the hopper (68). The hopper (68) is oriented at an angle of 45 degrees to the slide chute (16). The lower portion (52) has an opening cut therein large enough to admit a slide, and in alignment with the chute (16).

The slide carrier (54) has a similar opening cut therein. When in the load position (with the arm, 64, against limit-stop, 58), this opening is in alignment with the hopper (68) so that a slide in the hopper is able to drop by force of gravity into the opening of the carrier (54). However, the slide is restrained from dropping into the chute (16) by the lower portion (52). This is illustrated more clearly in the above-identified copending patent application, FIGURES 5—7.

As the slide carrier arm (64) is rotated counterclockwise, the single slide in the carrier is rotated in the same direction. The slide is unloaded and drops into the chute (16) when the arm (64) reaches limit-stop (56). This is because the opening in the slide carrier (54) becomes aligned with the opening in the lower portion (52), thus allowing the slide to drop therethrough.

The slide holder (18) is held in the position shown, in alignment with the chute (16) by means of spring 72, which exerts tension on the arm (70), which is fastened to the pivot pin (20). The arm (70) is connected through a linkage to the carrier arm (64) so that the carrier is normally held against the limit-stop (56). The spring (73) exerts a force on carrier arm (64) tending to urge the carrier toward limit-stop 58. However, the force of spring 73 is insufficient to overcome the countervailing force of spring 72.

A link (76) has a pin (74) connected thereto. The pin (74) engages a slot (75) in another link (78). When the arm (70) is rotated in the direction of the arrow, the pin (74), moves in the slot (75), thus releasing force on the link (78). The spring (73) forces the carrier arm (64) to limit-stop, 58. In this position, a slide drops into the carrier. When the arm (70) is released, it returns to the position shown in FIGURE 8, and the slide carrier arm is forced against limit-stop 56 through the action of pin 74, against the end of slot 75. The slide in the carrier now drops into the chute (16) where it slides by force of gravity into the slide holder (18). The slide can now be viewed, and removed for editing.

A slide in the holder (16) can be loaded into the tray (36) by again rotating arm 70 in the direction of the arrow. The slide in the holder will drop into the tray (36) when the holder reaches the vertical position. The next slide in the hopper (68) will drop into the slide carrier because the carrier arm will have been released to move to limit-stop 58. The slide will not, however, drop into chute 16 until the arm (72) and holder (18) are allowed to return to the initial position, at which time the carrier arm (64) will be forced back to limit-stop 56.

The slide holder (18) shown in the various figures is pivotally mounted at one end by means of a pin (20). It will be understood by those skilled in the art that the holder can be pivoted at any point so long as the pin does not interfere with the slide in the holder. For example, if the pivot point were at the center of the holder, the arc of the restraining means (26) would have a radius of one half that shown in FIGURE 2. The size of the entire mechanism can then be reduced accordingly.

**Claims**

1. A slide-handling mechanism comprising:
a tray loader including means (18) for holding a slide above a slide tray (36), means (30, 32, 33) for registering said tray loader above a slide compartment of said slide tray (36), and a means (28) that allows a slide when vertically held in said holding means to drop into said compartment, characterized by:
means (23) for providing a limit stop for said holding means (18) by which said holding means is maintained in a first position in which a slide in the correct position for previewing is held inclined to the vertical position in said holding means;
means (20, 24) for moving said holding means (18) from said first position to a position in which the slide is vertically held, and
means (26) for retaining said slide in said holding means (18), during the movement from said first position to said vertical position.

2. The slide handling mechanism in accordance with claim 1 characterized in that said slide tray (36) is provided with a plurality of slide compartments and in that said means for registering said tray loader above a slide compartment of said slide tray (36) includes means (30, 32) for allowing relative motion between said slide tray (36) and said slide tray loader so that said tray loader may be registered above any one compartment of said plurality of compartments.

3. The slide-handling mechanism in accordance with Claim 1 or 2 characterized by a chute (16) oriented at an incline to horizontal adapted to receive a slide, for providing a passage through which said slide may pass from an upper end of said chute to a lower end of said chute by force of gravity, said chute being located with respect to said holding means (18) such that the lower end of said chute is in alignment with said holding means when said holding means is in said first position, whereby a slide placed in said chute at the upper end thereof drops by force of gravity to the lower end of said chute where said slide exits from said chute and into said holding means.

4. The slide-handling mechanism in accordance with Claim 1 or 3 characterized in that said slide tray (36) is provided with a plurality of slide compartments and wherein said means for registering said tray loader above a slide compartment of the slide tray (36) includes means (38) for indexing said registering means (33) to a particular slide compartment above which it is desired to register said tray loader.

5. The slide-handling mechanism in accordance with Claim 3 or 4 further comprising:
means (52, 54, 68) located above said upper end of said chute (16) for dropping slides, one by one, onto said chute at said upper end thereof.

6. The slide-handling mechanism in accordance with Claim 5 characterized by first means for activating said means (20) for moving said holding means (18) to place said holding means in said first position, and second means for activating said slide-dropping means (52, 54, 68) to thereby drop a slide onto said chute (16) whereby a slide in said slide-dropping means is dropped onto said chute, where it drops by force of gravity into said holding means and upon deactivation of said first means is moved to said vertical position, where said slide is free to drop from said holding means.

7. The slide-handling mechanism in accordance with claim 4 characterized in that said slide tray (36) is provided with a plurality of numbers associated with said slide compartments and wherein said means (38) for indexing includes an index mark (35) so that one of said plurality of numbers on said slide tray opposite said index mark can be read when said slide-handling means is indexed to a particular slide compartment above which it is desired to register said tray loader.

**Patentansprüche**

1. ‾ Diapositiv-Handhabungsmechanismus, aufweisend:
ein Magazin-Ladegerät mit einem Mittel (18) zum Halten eines Diapositivs über einem Diamagazin (36), Mittel (30, 32, 33) zum Ausrichten des Magazin-Ladegeräts über einem Diafach des Diamagazins (36) und ein Mittel (28), welches einem vertikal in den Haltemitteln gehaltenen Diapositiv in das Fach zu fallen gestattet, gekennzeichnet durch:
Mittel (23) zur Bildung eines Grenzanschlags für das Haltemittel (18), durch die das Haltemittel in einer ersten Position gehalten wird, in der ein ·

Diapositiv in der für eine Betrachtung richtigen Lage geneigt zur Vertikallage in dem Haltemittel gehalten wird;

Mittel (20, 24) zum Bewegen des Haltemittels (18) aus der ersten Position in eine Position, in der das Dispositiv vertikal gehalten wird; und

Mittel (26) zum Zurückhalten des Diapositivs in dem Haltemittel (18) während dessen Bewegung aus der ersten Position in die vertikale Position.

2. Diapositiv-Handhabungsmechanismus nach Anspruch 1, dadurch gekennzeichnet, daß das Diamagazin (36) mit einer Vielzahl von Diafächern versehen ist und daß die Mittel zum Ausrichten des Magazin-Ladegeräts über einem Diafach des Diamagazins (36) Mittel (30, 32) zum Ermöglichen einer Relativbewegung zwischen dem Diamagazin (36) und dem Diamagazin-Ladegerät aufweisen, so daß das Magazin-Ladegerät über irgendeinem Fach der Vielzahl von Fächern ausgerichtet werden kann.

3. Diapositiv-Handhabungsmechanismus nach Anspruch 1 oder 2, gekennzeichnet durch eine zur Horizontalen geneigte, zur Aufnahme eines Diapositivs geeignete Rutsche (16) zur Bildung eines Durchlasses, durch den das Diapositiv von einem oberen Ende der Rutsche zu einem unteren Ende der Rutsche unter Schwerkraft durchgtreten kann, wobei die Rutsche bezüglich des Haltemittels (18) derart angeordnet ist, daß das untere Ende der Rutsche mit dem Haltemittel ausgerichtet ist, wenn sich das Haltemittel in der ersten Position befindet, wodurch ein am oberen Ende der Rutsche befindliches Diapositiv unter Schwerkraft zum unteren Ende der Rutsche fällt, wo das Diapositiv aus der Rutsche in das Haltemittel austritt.

4. Diapositiv-Handhabungsmechanismus nach Anspruch 1 oder 3, dadurch gekennziechnet, daß das Diamagazin (36) mit einer Vielzahl von Diafächern ist und daß di Mittel zum Ausrichten des Magazin-Ladegeräts über einem Diafach des Diamagazins (36) Mittel zum Weiterschalten des Ausrichtmittels (33) auf ein spezielles Diafach aufweisen, mit dem das Magazin-Ladegerät ausgerichtet werden soll.

5. Diapositiv-Handhabungsmechanismus nach Anspruch 3 oder 4, ferner aufweisend:

über dem oberen Ende der Rutsche (16) angeordnete Mittel (52, 54, 68) zum Einzelabwurf von Diapositiven auf das obere Ende der Rutsche.

6. Diapositiv-Handhabungsmechanismus nach Anspruch 5, gekennzeichnet durch ein erstes Mittel zum Aktivieren der Mittel (20) zum Bewegen des Haltemittels (18), um das Haltemittel in die erste Position zu bringen, und zweite Mittel zum Aktivieren der Diapositiv-Abwurfmittel (52, 54, 68), um dadurch ein Diapositiv auf die Rutsche (16) abzuwerfen, wodurch ein Diapositiv in den Abwurfmitteln auf die Rutsche (16) abzuwerfen, wodurch ein Diapositiv in dem Abwurfmittel auf die Rutsche fallengelassen wird, wo es durch Schwerkraft in das Haltemittel fällt und nach Entaktivierung des ersten Mittels in die Vertikalposition bewegt wird, wo das Diapositiv zum Herausfallen aus dem Haltemittel freigesetzt wird.

7. Diapositiv-Handhabungsmechanismus nach Anspruch 4, dadurch gekennzeichnet, daß das Diamagazin (36) mit einer Vielzahl von den Diafächern zugeordneten Nummern versehen ist und daß die Weiterschaltmittel (38) eine Indexmarke (35) aufweisen, so daß eine der Indexmarke gegenüberliegende Nummer aus der Vielzahl von Nummern auf dem Diamagazin ablesbar ist, wenn das Diahaltemittel auf ein spezielles Diafach weitergeschaltet ist, über dem das Magazin-Ladegerät ausgerichtet werden soll.

**Revendications**

1. Mécanisme de manipulation de diapositives comprenant:

— un chargeur de tambour comprenant un moyen (18) pour maintenir une diapositive au-dessus d'un tambour à diapositives (36), des moyens (30, 32, 33) pour amener ledit chargeur de tambour par le haut en coïncidence avec un compartiment à diapositive dudit tambour à diapositives (36), et un moyen (28) qui permet à une diapositive, lorsqu'elle est retenue verticalement dans ledit moyen de retenue, de tomber dans ledit compartiment, caractérisé par:

— un moyen (23) pour servir audit moyen de retenue (18) de butée-limite par laquelle ledit moyen de retenue est maintenu dans une première position dans laquelle une diapositive se trouvant en position correcte pour un pré-examen est maintenue inclinée par rapport à la position verticale dans ledit moyen de retenue;

— des moyens (20, 24) pour déplacer ledit moyen de retenue (18) de ladite première position jusque dans une position où la diapositive est maintenue verticalement, et

— un moyen (26) pour retenir ladite diapositive dans ledit moyen de retenue (18), pendant le mouvement de ladite première position jusqu'à ladite position verticale.

2. Mécanisme de manipulation de diapositives selon la revendication 1, caractérisé par le fait que ledit tambour à diapositives (36) est pourvu d'une pluralité de compartiments à diapositives et que lesdits moyens pour amener en correspondance ledit chargeur de tambour au-dessus d'un compartiment à diapositives dudit tambour à diapositives (36) comprennent des moyens (30, 32) permettant un mouvement relatif entre ledit tambour à diapositives (36) et ledit chargeur de tambour de telle sorte que ledit chargeur de tambour puisse être amené par le haut en correspondance avec un compartiment quelconque parmi ladite pluralité de compartiments.

3. Mécanisme de manipulation de diapositives selon la revendication 1 ou 2, caractérisé par une goulotte (16) inclinée par rapport à l'horizontale et agencée pour recevoir une diapositive, afin de créer un passage par lequel ladite diapositive puisse passer d'une extrémité supérieure de ladite goulotte jusqu'à une extrémité inférieure de ladite goulotte sous l'effet de la gravité, ladite goulotte étant placée par rapprt audit moyen de retenue (18) de telle sorte que l'extrémité inférieure de ladite goulotte soit alignée avec ledit moyen de retenue quand ce moyen de retenue se trouve dans ladite première position, de telle sorte qu'un diapositive placée à l'extrémité supérieure de ladite goulotte tombe sous l'effet de la gravité jusqu'à l'extrémité inférieure de ladite goulotte où ladite dispositive sorte de ladite goulotte et pénètre dans ledit moyen de retenue.

4. Mécanisme de manipulation de diapositives selon la revendication 1 ou 3, caractérisé par le fait que ledit tambour à diapositives (36) est pourvu d'une pluralité de compartiments à diapositives et que lesdites moyens pour amener ledit chargeur de tambour par le haut en correspondance avec un compartiment à diapositive dudit tambour (36) comprennent un moyen (38) pour aligner lesdits moyens de mise en coïncidence (33) avec un compartiment à diapositive particulier avec lequel on désire amener par le haut en correspondance ledit chargeur de tambour.

5. Mécanisme de manipulation de diapositives selon la revendication 3 ou 4, comprenant en outre:

— des moyens distributeurs (53, 54, 68) placés au-dessus de ladite extrémité supérieure de ladite goulotte (16) pour faire tomber des diapostives, un par une, sur ladite extrémité supérieure de ladite goulotte.

6. Mécanisme de manipulation de diapositives selon la revendication 5, caractérisé par un premier moyen pour actionner ledit moyen (20) d'entraînement dudit moyen de retenue (18) afin de placer ledit moyen de retenue dans ladite première position, et un second moyen pour actionner lesdits moyens distributeurs de diapositives (52, 54, 68) pour fair tomber ainsi une diapositive sur ladite goulotte (16), de sorte qu'une diapositive se trouvant dans lesdits moyens distributeurs est déchargée sur ladite goulotte, à partir de laquelle elle tombe sous l'effet de la gravité dans ledit moyen de retenue et, lors d'une désactivation dudit premier moyen, est amenée dans ladite position verticale, à partir de laquelle ladite diapositive peut tomber librement dudit moyen de retenue.

7. Mécanisme de manipulation de diapositives selon la revendication 4, caractérisé par le fait que ledit tambour à diapositives (36) est pourvu d'une pluralité de nombres associés auxdits compartiments à diapositives et que ledit moyen (38) de présentation comprend un repère de présentation (35) de telle sorte que l'un de ladite pluralité de nombres se trouvant sur ledit tambour à diapositives en regard dudit repère de présentation puisse être lu lorsque ledit moyen de manipulation de diapositive est présenté par le haut devant un compartiment à diapositive particulier qu'on désire amener en correspondance avec ledit chargeur de tambour.

0 096 032

FIG.1

FIG.7

FIG.8

1

30°

16

19

22

23

18

20

25

14

26

28

**FIG.2**

8   6   4   2   0   140   130

14   23

16

19   21

22

17

27

24   20

**FIG.3**

FIG.4

FIG.5

FIG.6

0 096 032